# EUROPEAN PATENT SPECIFICATION

(11) **EP 1 461 977 B1**
(45) Date of publication and mention of the grant of the patent: **31.10.2007**
(21) Application number: 02803419.7
(22) Date of filing: 20.11.2002
(51) Int. Cl.: H04Q 7/38, H04Q 7/32

(54) **FORMATION OF A USER ID**
AUSBILDUNG EINER BENUTZER-ID
FORMATION DE L'ID D'UN UTILISATEUR

(30) Priority: 23.11.2001 FI 20012299
(43) Date of publication of application: 29.09.2004
(73) Proprietor: TeliaSonera Finland Oyj, 00510 Helsinki (FI)
(72) Inventor: VÄÄNÄNEN, Kai, FIN-02940 Espoo (FI); ALA-LUUKKO, Sami, FIN-00200 Helsinki (FI)
(74) Representative: Virkkala, Jukka Antero
(86) International application number: PCT/FI2002/000933
(87) International publication number: WO 2003/045097

(56) References cited:
- EP-A1- 1 239 690
- US-A1- 2002 120 857

## Description

### BACKGROUND OF THE INVENTION

The invention relates to a method, a mobile station and a conversion program by means of which a Private User ID to be brought into use in the third standardization version (release 5) of the UMTS (Universal Mobile Telecommunications System) can be formed. According to the present state of the UMTS standardization, two different user IDs are used in the third standardization version, in connection with the IMS (IP Multimedia Subsystem). The first one is a Public User ID, by means of which the user is called, in the same way as by means of a telephone number. The other one is a Private User ID, by means of which the user logs in to a network. The Private User ID must be of the NAI (Network Access Identifier) form, for instance number@operator.domain.

When the user ID is reformed relative to the conventional GSM system, the subscribers' SIM cards must be changed to what are called USIM cards (UMTS SIM). Although this is inevitable in the long run, it causes a short-term logistic problem, as the operators must quickly change the SIM cards of all subscribers to USIM cards.

### BRIEF DESCRIPTION OF THE INVENTION

On one hand, the invention is based on detecting the above-mentioned logistic problem. Upon drafting the present application, the problem does not occur yet. On the other hand, the invention is based on solving this logistic problem or at least alleviating it. Effects of the problem can be reduced if the time of use of the present SIM cards can be extended. This is achieved with a method and system that are characterized in what is stated in the independent claims. Preferred embodiments of the invention are described in the dependent claims.

The basic idea of the invention is that a conversion program in a mobile station converts the subscriber ID of the IMSI (International Mobile Subscriber Identity) form on a SIM card into a Private User ID of the NAI form according to the third standardization version of the UMTS.

At first sight, the invention is against the standard, because reference 1 states in point 6.9.1 "Private user identity" that each 3GPP IMS subscriber must have a Private user identity that indicates the operator of the home network. At closer look, however, the invention is at least in line with the spirit of the standard, because the conversion program according to the invention provides the user with a dynamic Private user identity, although this ID has not been statically installed on the USIM card.

An advantage of the method and the system according to the invention is that the subscriber's SIM card does not have to be changed to a USIM card immediately when the subscriber wishes to bring into use services defined in the third standardization version of the UMTS. A new UMTS/IMS mobile station can be brought into use immediately, as long as the subscriber has an SIM card according to the GSM system, for example. Further, the subscribers can try out new UMTS/IMS mobile stations with their old SIM cards, on which an IMSI ID has been stored.

### BRIEF DESCRIPTION OF THE FIGURES

The invention will now be described in greater detail in connection with preferred embodiments, with reference to the attached drawings, of which

Figure 1 is a block and signalling diagram illustrating the invention; and

Figure 2 illustrates conversion of an ID.

### DETAILED DESCRIPTION OF THE INVENTION

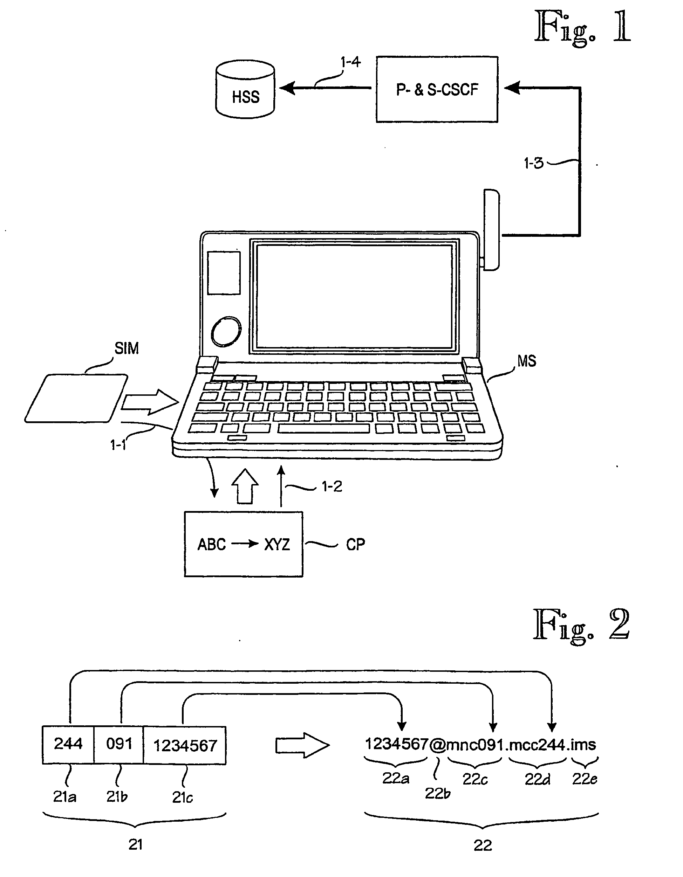

Figure 1 is a combined block and signalling diagram showing how the user of a mobile station can register as an IMS service user. Depending on the terminal, registration takes place either automatically or as a result of the user's separate command. In Figure 1, reference MS indicates a mobile station, more precisely a mobile station according to the UMTS system. SIM is an SIM card, i.e. the subscriber's ID card (Subscriber Identity Module). For the registration of the mobile station, the figure shows network elements P-& S-CSF and HSS, the first one meaning "Proxy Call Session Control Function" and "Serving Call Session Control Function". These are two logical functionalities defined in the UMTS/IMS environment, which are in Figure 1 combined to a common element. HSS is a more advanced version of the home location register (HLR). The invention is independent from the type of the radio access network (UTRAN, WLAN, etc.).

The HSS of the home network needs for the registration a subscriber ID, i.e. a Private User ID. In step 1-1, the conversion program CP installed in an IMSI mobile station reads the IMSI ID on the SIM card. In step 1-2, the CP converts the IMSI ID into a Private User ID of the NAI form. In step 1-3, the mobile station MS sends a registration message to the IMS network, which understands only a Private User ID of the NAI form. In step 4, the P- & S-CSCF element transmits the registration data to the HSS. Part of the registration data is the subscriber ID, i.e. the Private User ID. Steps 1-3 and 1-4 are according to the third standardization version of the UMTS; in other words, operation outside the mobile station MS is completely conventional. The difference compared with the prior art is seen only in steps 1-1 and 1-2, where a Private User ID is not read on a USIM card of the new type (the mobile station does not contain a USIM card), but instead, an IMSI ID is read on an "old" SIM card according to the GSM system, for instance, and converted into a Private User ID with a conversion program installed in the mobile station. Naturally, the mobile station has been first supplemented by installing the particular conversion program in it.

Figure 1 contains three kinds of arrows. The massive arrows in connection with the SIM card and the conversion program CP mean that the particular elements are in reality inside the mobile station, but in order to illustrate the invention they have been drafted outside the mobile station. The thin arrows 1-1 and 1-2 refer to data transmission between the mobile station MS and elements SIM and CP related to it. The thick arrows 1-3 and 1-4 refer to data transfer between the mobile station and separate network elements.

Figure 2 illustrates conversion of an identifier in accordance with a preferred embodiment of the invention. The embodiment shown in Figure 2 is based on the following idea. The primary form of representation of a Private User ID is number@operator.domain. The problem with this form of representation is that although containing the subscriber's number, the IMSI does not contain the operator's domain name, which should be stored fixedly either in the conversion program CP (which would thus become operator-specific) or in a storage location available for the conversion program. According to the embodiment of Figure 2, this residual problem is solved in such a way that the operator's domain name (e.g. "sonera.com") is not used in the Private User ID, but a domain name which is to some extent artificial is formed of a few standard texts and elements contained in the IMSI ID, as described in more detail in the following. Reference 21 is an IMSI ID stored on the SIM card of the mobile station, comprising three parts. Reference 21 a is a mobile country code mcc, 244 in the case of Finland, for instance. Reference 21 b is the mobile network code mnc, i.e. the operator code, which is for instance in the Sonera network 091. Reference 21c is the subscriber's individual number in the particular operator's network, in this example 1234567. Reference 22 is the result of the conversion performed by the conversion program CP, i.e. a Private User ID of the NAI form. It comprises the following parts. A first part 22a is the subscriber's individual number in the particular operator's network, i.e. the same as part 21 c in the IMSI ID 21. A second part 22b is a symbol "@". A third part 22c is letters "mnc", which are followed by the operator code (here 091). A fourth part 22d is letters "mcc", which are followed by the mobile country code (here 244). A fifth part 22e is a service ID, here "ims".

The identifier 22 is to be interpreted as follows: a user within service "ims", in Finland, in the Sonera network, having the number "1234567".

### Reference:

1. 3GPP TSG SA WG3 Security- IMS Security ad-hoc (14 September 2001)

3GPP publication in: http://www.3gpp.org/
ftp/tsg_sa/WG3_Security/TSGS3_ADHOC_MAP_tMS_Sophia/Docs/PDF/S3z010093.pdf

### Abbreviations:

3GPP: Third Generation Partnership Project
IMS: IP Multimedia Subsystem
IMSI: International Mobile Subscriber Identity
MCC: Mobile Country Code
MNC: Mobile Network Code
NAI: Network Access Identifier
P-&S-CSCF: Proxy Call Session Control Function" ja "Serving Call Session Control Function
SIM: Subscriber Identity Module
UMTS: Universal Mobile Telecommunications System
USIM: UMTS SIM
UTRAN: UMTS Terrestrial Radio Access Network
WLAN: Wireless Local Area Network

## Claims

1. A method for providing a Private User ID according to the UMTS specifications, in which method a subscriber identity module (SIM) is installed in a mobile station (MS), in which subscriber identity module an IMSI ID (21) has been stored, comprising a mobile country code (21 a), mobile network code (21 b) and subscriber number (21 c);
**characterized by** installing in the mobile station a conversion program (CP), which in connection with registration (1-3, 1-4) of the mobile station
- reads (1-1) the IMSI ID in the subscriber identity module (SIM); and
- produces (1-2) the Private User ID (22), which is of the NAI Network Access Identifier form, on the basis of the IMSI ID (22);

2. A method according to claim 1, **characterized by** the conversion program producing the Private User ID (22) only on the basis of the mobile country code (21 a), mobile network code (21 b) and subscriber number (21c) contained in the IMSI ID, whereby the conversion program is independent from the network operator.

3. A mobile station (MS) comprising an interface for the subscriber identity module (SIM), in which subscriber identity module an IMSI ID has been stored, comprising a mobile country code (21 a), mobile network code (21 b) and subscriber number (21 c);
**characterized in that** the mobile station comprises a conversion program (CP) which is arranged in connection with registration (1-3, 1-4) of the mobile station
- to read (1-1) the IMSI ID (21) in the subscriber identity module (SIM); and
- to produce (1-2) a Private User ID (22), which is of the NAI Network Access Identifier form, on the basis of the IMSI ID.

4. A conversion program (CP) installable in a mobile station (MS), **characterized in that** the conversion program is arranged in connection with registration (1-3, 1-4) of the mobile station
- to read (1-1) in the subscriber identity module (SIM) connected to the mobile station (SIM) an IMSI ID comprising a mobile country code (21a), mobile network code (21 b) and subscriber number (21 c); and
- to produce (1-2) a Private User ID (22), which is of the NAI Network Access Identifier form, on the basis of the IMSI identifier.

## Patentansprüche

1. Verfahren zum Bereitstellen einer persönlichen Nutzerkennung gemäß den UMTS-Spezifikationen, wobei in diesem Verfahren ein Teilnehmeridentitätsmodul (SIM) in einer mobilen Station (MS) installiert ist, wobei in diesem Teilnehmeridentitätsmodul eine IMSI-Kennung (21) gespeichert worden ist, die einen mobilen Ländercode (21a), einen mobilen Netzknotencode (21b) und eine Teilnehmernummer (21c) aufweist,
***gekennzeichnet durch***
Installieren eines Wandlerprogramms (CP), welches in Verbindung mit einer Registrierung (1-3, 1-4) der mobilen Station
- die IMSI-Kennung in dem Teilnehmeridentitätsmodul (SIM) liest (1-1); und
- die persönliche Nutzerkennung (22), welche in der Form einer NAI-Netzzugangskennung ist, auf der Grundlage der IMSI-Kennung (22) erzeugt,
in der mobilen Station.

2. Verfahren nach Anspruch 1, ***gekennzeichnet durch*** das Wandlerprogramm, das die persönliche Nutzerkennung (22) lediglich auf der Grundlage des mobilen Ländercodes (21 a), des mobilen Netzknotens (21 b) und der Teilnehmernummer (21 c), die in der IMSI-Kennung enthalten sind, erzeugt, wodurch das Wandlerprogramm unabhängig von dem Netzbetreiber ist.

3. Mobile Station (MS), die eine Schnittstelle für das Teilnehmeridentitätsmodul (SIM) aufweist, wobei in diesem Teilnehmeridentitätsmodul eine IMSI-Kennung gespeichert worden ist, die einen mobilen Ländercode (21a), einen mobilen Netzknoten (21 b) und eine Teilnehmernummer (21 c) aufweist,
***dadurch gekennzeichnet, dass*** die mobile Station ein Wandlerprogramm (CP) aufweist, welches in Verbindung mit einer Registrierung (1-3, 1-4) der mobilen Station angeordnet ist,
- um die IMSI-Kennung in dem Teilnehmeridentitätsmodul (SIM) zu lesen (1-1); und
- um eine persönliche Nutzerkennung (22), welche in der Form einer NAI-Netzzugangskennung ist, auf der Grundlage der IMSI-Kennung (22) zu erzeugen.

4. Wandlerprogramm (CP), das in eine mobile Station (MS) installierbar ist,
***dadurch gekennzeichnet, dass*** das Wandlerprogramm in Verbindung mit einer Registrierung (1-3, 1-4) der mobilen Station angeordnet ist,
- um eine IMSI-Kennung, die einen mobilen Ländercode (21a), einen mobilen Netzknoten (21b) und eine Teilnehmernummer (21 c) aufweist, in dem Teilnehmeridentitätsmodul (SIM) zu lesen (1-1), das mit der mobilen Station (SIM) verbunden ist; und
- um eine persönliche Nutzerkennung (22), welche in der Form einer NAI-Netzzugangskennung ist, auf der Grundlage der IMSI-Kennung (22) zu erzeugen.

## Revendications

1. Procédé pour fournir une ID privée d'utilisateur selon les spécifications UMTS, dans lequel procédé un module d'identité d'abonné (SIM) est installé dans une station mobile (MS), dans lequel module d'identité d'abonné a été enregistré un IMSI ID (21) comprenant un code de pays de mobile (21a), un code de réseau de mobile (21b) et un numéro d'abonné (21c):
**caractérisé en ce qu'**on installe dans la station mobile un programme de conversion (CP) qui, en liaison avec l'enregistrement (1-3, 1-4) de la station mobile
- lit (1-1) le IMSI ID dans le module d'identité d'abonné (SIM) ; et
- produit (1-2) l'ID privée d'utilisateur (22) sur la base du IMSI ID (22).

2. Procédé selon la revendication 1, **caractérisé en ce que** le programme de conversion produit l'ID privée d'utilisateur (22), qui est sous la forme de l'identifiant d'accès au réseau NAI seulement sur la base du code de pays de mobile (21a), du code de réseau de mobile (21c) et du numéro d'abonné (21c)contenus dans le IMSI ID, le programme de conversion étant de cette manière indépendant de l'opérateur du réseau.

3. Station mobile (MS) comprenant une interface pour le module d'identité d'abonné (SIM), dans lequel module d'identité d'abonné a été stocké un IMSI ID, comprenant un code de pays de mobile (21a), un code de réseau du mobile (21b) et un numéro d'abonné (21c) ;
**caractérisée en ce que** la station mobile comprend un programme de conversion (CP) qui est agencé en liaison avec l'enregistrement (1-3, 1-4) de la station mobile
- pour lire (1-1) le IMSI ID (21) dans le module d'identité d'abonné (SIM); et
- pour produire (1-2) une ID privée d'utilisateur (22) qui est sous la forme de l'identifiant d'accès au réseau NAI, sur la base du IMSI ID.

4. Programme de conversion (CP) pouvant être installé dans une station mobile (MS), **caractérisé en ce que** le programme de conversion est agencé en liaison avec l'enregistrement (1-3, 1-4) de la station mobile
- pour lire (1-1) dans le module d'identité d'abonné (SIM) connecté à la station mobile (SIM) un IMSI ID comprenant un code de pays de mobile (21a), un code de réseau de mobile (21b) et un numéro d'abonné (21c); et
- pour produire (1-2) une ID privée d'utilisateur (22), qui est sous la forme de l'identifiant d'accès au réseau NAI, sur la base de l'identifiant IMSI.
